# EUROPÄISCHE PATENTSCHRIFT

(11) **EP 1 253 028 B1**
(45) Veröffentlichungstag und Bekanntmachung des Hinweises auf die Patenterteilung: **16.12.2009**
(21) Anmeldenummer: 02004818.7
(22) Anmeldetag: 02.03.2002
(51) Int. Cl.: B60G 7/00, B60B 35/00, B62D 65/00

(54) **Fahrzeug-Achsbauteil**
Vehicle axle component
Elément constitutif d'essieu pour véhicule

(30) Priorität: 25.04.2001 DE 10120219
(43) Veröffentlichungstag der Anmeldung: 30.10.2002
(73) Patentinhaber: Bayerische Motoren Werke Aktiengesellschaft, 80809 München (DE)
(72) Erfinder: Jurr, Reinhold, 81247 München (DE); Bauer, Albert, 80933 München (DE)

(56) Entgegenhaltungen:
- EP-A2- 0 900 675
- WO-A-94/29133
- JP-A- 6 278 433

## Beschreibung

Die Erfindung betrifft ein Fahrzeug-Achsbauteil, insbesondere ein Achsträger-Bauelement oder einen Lenker einer Kraftfahrzeug-Radaufhängung, welches zumindest abschnittsweise stabförmig und dabei im Querschnitt einen freien Innenraum aufweisend ausgebildet ist. Die gattungsgemäße EP 0 900 675 A zeigt ein solches Fahrzeug-Achsbauteil.

Für unterschiedliche Anwendungsfälle ist es erforderlich, von einer Stelle des Kraftfahrzeuges zu einem an anderer Stelle, insbesondere im Bereich oder im Umfang der Fahrzeug-Achse oder Fahrzeug-Radaufhängung vorgesehenen oder angeordneten vorzugsweise hydraulisch betätigten Element oder Aktuator eine oder mehrere Hydraulikleitungen zu führen. Für diese Hydraulikleitung(en) muss dabei ein ausreichender Bauraum bereitgestellt werden, wobei zu berücksichtigen ist, dass die im Fahrzeug-Achsbereich vorgesehenen Bauteile nicht unerhebliche Relativbewegungen ausführen, und wobei es erwünscht sein kann, die Hydraulikleitung(en) vor einer Beschädigung (bspw. durch Steinschlag) zu schützen.

Hiermit soll nun ein Fahrzeug-Achsbauteil nach dem Oberbegriff des Anspruchs 1 aufgezeigt werden, das diesen Anforderungen bei gleichzeitiger Erfüllung gängiger Komfortanforderungen gerecht wird (= Aufgabe der vorliegenden Erfindung).
Die Lösung dieser Aufgabe ist dadurch gekennzeichnet, dass im freien Innenraum (des Achsbauteils) eine Hydraulikleitung unter im wesentlichen schallisolierender Anbindung an das Achsbauteil geführt ist. Vorteilhafte Aus- und Weiterbildungen sind im abhängigen Anspruch aufgelistet.

Erfindungsgemäß ist die Hydraulikleitung zumindest abschnittsweise innerhalb des quasi hohlen Achsbauteils geführt, wodurch der ansonsten nicht benötigte Achsbauteil-Innenraum im Sinne einer Bauraum-Optimierung optimal genutzt wird, und wodurch gleichzeitig die Hydraulikleitung geschützt ist. Nun können aber durch das in der (oder den) Hydraulikleitung(en) geführte Hydraulikmedium unerwünschte Geräusche in das Fahrwerk bzw. in das Fahrzeug-Achsbauteil eingeleitet werden, insbesondere wenn die Hydraulikleitung(en) an diesem Achsbauteil befestigt ist bzw. sind, was aus Haltbarkeits- und Festigkeitsgründen anzustreben ist. Ungünstigstenfalls könnten diese Geräusche dann in die Fahrzeug-Karosserie weitergeleitet werden. Dies wird nun erfindungsgemäß dadurch vermieden, dass die Hydraulikleitung(en) in schallisolierender Weise an das Achsbauteil angebunden ist/sind.

Im folgenden wird die Erfindung anhand eines bevorzugten Ausführungsbeispieles weiter erläutert, wobei die beigefügte einzige **Figur** eine räumliche Ansicht eines in seiner Gesamtheit mit der Bezugsziffer 1 bezeichneten Vorderachs-Trägers eines Personenkraftwagens zeigt, der einen sog. Achsträger-Arm als erfindungsgemäßes Fzg.-Achsbauteil 2 aufweist, in welchem abschnittsweise zwei Hydraulikleitungen 3 geführt sind. Erfindungswesentlich können dabei sämtliche näher beschriebenen Merkmale sein.

Im bevorzugten Ausführungsbeispiel führen die beiden Hydraulikleitungen 3 von einem nicht dargestellten sog. hydraulischen Schwenkmotor, der in etwa in der Mitte des Vorderachs-Trägers 1 angeordnet ist, und mit Hilfe dessen die beiden Hälften des mittig geteilten, ebenfalls nicht dargestellten Stabilisators gegeneinander verdreht werden können, um eine aktive Wankstabilisierung des Fahrzeugs zu realisieren, zu einer ebenfalls nicht dargestellten, bspw. im Bereich der sog. A-Säule des PKW's angeordneten hydraulischen Steuereinheit für diesen Schwenkmotor.

Wie ersichtlich sind die Hydraulikleitungen 3 in einem Teilbereich innerhalb des in seinem Querschnitt einen freien Innenraum aufweisenden Achsbauteil 2, das hier ein sog. Arm des Achsträgers 1 ist, geführt. Wie ersichtlich ist dieser Achsträger-Arm bzw. dieses Achsbauteil 2 im wesentlichen stabförmig, ist als Hohlprofil ausgebildet, und besitzt einen im wesentlichen rechteckigen Querschnitt. Im Hohlraum bzw. Innenraum dieses stabförmigen Achsbauteiles 2 sind nun die Hydraulikleitungen 3 in dessen Längsrichtung verlaufend geführt.

Über einen an einer Längsseite des Achsbauteils 2 vorgesehenen Durchbruch 4 sind die Hydraulikleitungen 3 von außerhalb des Achsbauteils 2 in dessen Innenraum bzw. Hohlraum hineingeführt. Über die (in der Figurendarstellung) vordere offene Stirnseite des Achsbauteils 2, anhand derer dessen Querschnitt ersichtlich wird, sind die Hydraulikleitungen 3 aus dem Achsbauteil 2 herausgeführt.

Im Bereich dieser Stirnseite ist im Innenraum des Achsbauteils 2 ein Halteelement 5 angeordnet, über welches die Hydraulikleitungen 3 schallisolierend am Achsbauteil 2 befestigt sind. Zur Erzielung dieser Schallisolation besteht dieses Halteelement 5 aus einem elastomeren Werkstoff und umgibt die Hydraulikleitungen 3 rundum, wozu dieses Halteelement 5 in der Längsebene der Hydraulikleitungen 3 geteilt ausgebildet ist. In diesem Halteelement 5, welches seinerseits über eine Schraubverbindung 6 am bzw. im Achsbauteil 2 befestigt ist, sind die Hydraulikleitungen 3 quasi eingebettet. Das Halteelement 5 wirkt hier aufgrund seiner Ausführung in Elastomermaterial somit selbst als ein insbesondere bezüglich der Weiterleitung von Schall isolierendes Dämpfungselement.

Ein weiteres Halteelement 5' ist an der Außenseite des Achsbauteils 2 nahe von dessen Durchbruch 4 vorgesehen, um auch in diesem Bereich die durch diesen Durchbruch hindurchgeführten Hydraulikleitungen 3 zu fixieren. Dabei ist dieses weitere Halteelement 5' anders ausgebildet als das Halteelement 5, nämlich ähnlich der in der nicht vorveröffentlichten deutschen Patentanmeldung 100 35 020 verschriebenen Halterung, jedoch ist auch hierbei zwischen den Hydraulikleitungen 3 und einem Befestigungselement für das Halteelement 5' am Achsbauteil 2 ein eigenständiges nicht näher dargestelltes und als Schallisolierung wirkendes Dämpfungselement aus einem Elastomer-Werkstoff vorgesehen.

Abweichend von der Figurendarstellung kann es sich bei dem Fahrzeug-Achsbauteil mit hindurchgeführter Hydraulikleitung auch um ein beweglich aufgehängtes Achsbauteil handeln, wie überhaupt eine Vielzahl von Details insbesondere konstruktiver Art durchaus abweichend vom gezeigten Ausführungsbeispiel gestaltet sein kann, ohne den Inhalt der Patentansprüche zu verlassen. Stets erhält man eine äußerst kompakte, raumsparende Anordnung, in welcher die Hydraulikleitung(en) vorteilhafterweise geschützt sind, und wobei eine Übertragung von Körperschall aus der Hydraulikleitung in die Fahrzeug-Achse oder Fahrzeug-Karosserie unterbunden ist.

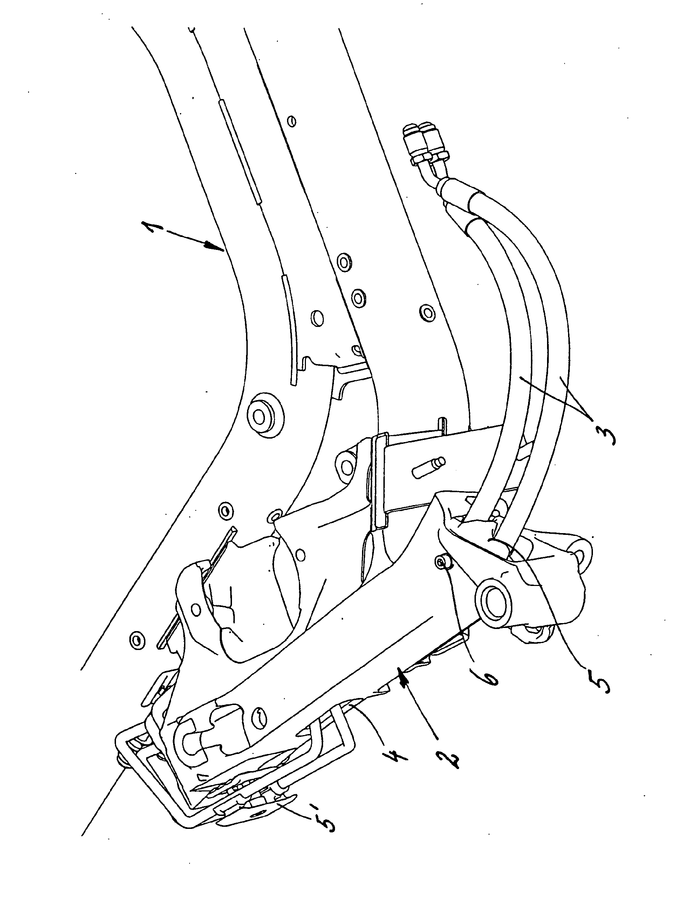

## Patentansprüche

1. Fahrzeug-Achsbauteil (2), insbesondere Achsträger-Bauelement oder Lenker einer Kraftfahrzeug-Radaufhängung, welches zumindest abschnittsweise stabförmig und dabei im Querschnitt einen freien Innenraum aufweisend ausgebildet ist, wobei im freien Innenraum eine Hydraulikleitung (3) verläuft, **dadurch gekennzeichnet, dass** die Hydraulikleitung unter im wesentlichen schallisolierender Anbindung an das Achsbauteil (2) geführt ist.

2. Fahrzeug-Achsbauteil nach Anspruch 1, **gekennzeichnet durch** zumindest eines der folgenden Merkmale:
• die im wesentlichen schallisolierende Anbindung ist an der Außenseite oder im Innenraum des Achsbauteils (2) vorgesehen
• die Anbindung erfolgt über ein bevorzugt mittels einer Schraubverbindung (6) am Achsbauteil (2) befestigtes Halteelement (5),
• das Halteelement (5) ist in der Längsebene der Hydraulikleitung (3) geteilt ausgebildet
• zwischen der Hydraulikleitung und einem Befestigungselement für das Halteelement am Achsbauteil ist ein Dämpfungselement aus einem Elastomer-Werkstoff vorgesehen.

## Claims

1. A vehicle axle component (2), more especially a crossmember component or link of a motor vehicle wheel suspension, which is, at least in portions, bar-shaped and configured to have a free interior space in cross-section, in this case, wherein a hydraulic line (3) extends in the free interior space, **characterised in that** the hydraulic line is guided with a substantially sound-insulating connection to the axle component (2).

2. A vehicle axle component according to claim 1, **characterised by** at least one of the following features:
• the substantially sound-insulating connection is provided on the outside or in the interior space of the axle component (2)
• the connection takes place by means of a holding element (5) preferably fastened by means of a screw connection (6) to the axle component (2),
• the holding element (5) is divided in the longitudinal plane of the hydraulic line (3)
• a damping element made of an elastomer material is provided between the hydraulic line and a fastening element for the holding element on the axle component.

## Revendications

1. Composant d'essieu (2) de véhicule, notamment composant de support d'essieu ou de bras d'une suspension de roue de véhicule automobile, qui est au moins par segments en forme de barre, et a ainsi en section un volume intérieur libre,
une conduite hydraulique (3) passant le volume intérieur libre,
**caractérisé en ce que**
la conduite hydraulique passe dans le composant de l'essieu (2) en étant fixée essentiellement avec isolation phonique.

2. Composant d'essieu de véhicule selon la revendication 1,
**caractérisé par**
au moins l'une des caractéristiques suivantes :
- la fixation essentiellement isolante phonique est prévue sur le côté extérieur ou dans le volume intérieur du composant d'essieu (2),
- la fixation se fait de préférence par l'intermédiaire d'une liaison vissée (6) à l'élément de fixation (5) auquel est fixé le composant d'essieu (2),
- l'élément de fixation (5) est réalisé divisé dans le plan longitudinal de la conduite hydraulique (3),
- un élément d'amortissement en un élastomère est prévu entre la conduite hydraulique et un élément de solidarisation de l'élément de fixation au composant d'essieu.
